# EUROPEAN PATENT SPECIFICATION

(11) **EP 3 616 579 B1**
(45) Date of publication and mention of the grant of the patent: **18.10.2023**
(21) Application number: 19191116.3
(22) Date of filing: 09.08.2019
(51) Int. Cl.: A47J 37/12, A47J 36/12

(54) **KITCHEN APPLIANCE COMPRISING MEANS OF SUPPORTING CONTAINERS INTENDED TO BE IMMERSED INTO THE APPLIANCE'S TANK**
KÜCHENGERÄT MIT MITTELN ZUM TRAGEN VON BEHÄLTERN, DIE DAZU BESTIMMT SIND, IN DEN TANK DES GERÄTES EINGEFÜGT ZU WERDEN
APPAREIL DE CUISINE COMPORTANT DES MOYENS DE SUPPORT DE RÉCIPIENTS DESTINÉS À ÊTRE IMMERGÉS DANS LE RÉSERVOIR DE L'APPAREIL

(30) Priority: 28.08.2018 FR 1857732
(43) Date of publication of application: 04.03.2020
(73) Proprietor: Illinois Tool Works, Inc., Glenview, Illinois 60025 (US)
(72) Inventor: BRUN-COSME-GAZOT, Jean-Marc, 39230 Passenans (FR)
(74) Representative: HGF

(56) References cited:
- GB-A- 1 516 469
- US-A1- 2017 164 787
- US-B1- 6 581 587
- US-B1- 8 826 807

## Description

### TECHNICAL FIELD

The present invention relates to a kitchen appliance, particularly a cooking appliance, comprising a cooking tank, a lid able to move between a tank-open position and a tank-closed position, and means for supporting containers, such as perforated baskets, intended to be immersed in the tank, the support means and the lid being able to move in rotation independently of one another.

### PRIOR ART

Numerous professional cooking appliances have a cooking tank in which products are intended to be cooked.

In general, such professional cooking appliances comprise a lid mobile in rotation between a tank-open position and a tank-closed position. The command for opening or closing the lid is generally an electrical command.

In certain professional cooking appliances, the lid is equipped with hooks on which baskets, intended to be immersed in the tank, are attached. In particular, since the hooks supporting the baskets are fixed to the lid, the closing of the lid allows the baskets to be immersed in the tank.

In other professional cooking appliances the lid is equipped with a bar on which baskets are hooked. In particular, as the lid is closed, the baskets slide, in a linear movement, into the tank.

However, the fact that the tank needs to be closed using the lid in order to immerse the baskets therein is restrictive. Specifically, the kitchen appliance therefore cannot be used for another mode of cooking other than the mode requiring the baskets.

In addition, when the command to close the lid is an electrical command, the closing is relatively slow because it may take several minutes.

The invention proposes a simple, effective and economical solution to this problem of the prior art. US2017/164787 A1 relates to a cooking system.

### OBJECTIVE OF THE INVENTION

The objective of the invention is to propose a kitchen, particularly cooking, appliance, comprising a cooking tank, a lid mobile in rotation between a tank-open position and a tank-closed position, and means for supporting baskets intended to be immersed in the tank, the baskets being able to be immersed in the tank while the lid is in its tank-open position.

### SUMMARY OF THE INVENTION

To this end, the invention proposes a kitchen, particularly cooking, appliance according to claim 1.

Advantageously, in a kitchen appliance according to the invention, there is no need to close the lid in order for the containers to be immersed in the tank.

Specifically, because the support means and the lid are able to move independently of one another, the support means may be in a lowered position while the lid is in the tank-open position.

As a result, the moving of the containers between their raised position and their lowered position is faster and easier than in the kitchen appliances according to the prior art.

In addition, such a kitchen appliance does not require additional parts because the shaft to which the lid is fixed is used again for securing the support means.

According to one embodiment, the support means are fixed on the kitchen appliance.

As an alternative, the support means are removable. This advantageously makes the use and cleaning of the appliance easier. Specifically, the support means can be removed when the appliance is in a cooking mode that does not require the containers, or for cleaning the appliance. In addition, that may be necessary in order to be able to pivot the tank without interfering with these support means, or for closing the lid.

The support means may comprise a bar in the overall shape of a U.

The support means may comprise fixing means for fixing to the shaft, which are arranged at each end of the bar.

The fixing means may be fixed to the shaft on each side of the lid. This advantageously makes it possible to improve the securing of the support means to the appliance, by comparison with a single fixing point for the support means. Furthermore, this advantageously means that the lid need not be adapted to the support means, thereby simplifying the method of manufacturing the kitchen appliance.

The fixing means may have an open-ended-spanner shape and comprise a first fork and a second fork.

For preference, the second fork has dimensions different from those of the first fork.

Advantageously, the open-ended-spanner shape of the fixing means in which the forks have different dimensions makes it possible to form a poka yoke device, and thus to avoid errors in mounting the support means on the shaft. Specifically, the different dimensions of the forks make it possible to prevent the support means from being mounted incorrectly, for example back to front. This advantageously makes it possible to have just one possible position of engagement of the support means on the shaft.

The bar may extend in a plane and the first and second forks may be inclined with respect to this plane. This advantageously makes it possible to avoid accidental removal of the bar in the lowered position.

The fixing means may comprise at least one magnet. When they do, the kitchen appliance may comprise at least one sensor arranged in such a way as to detect this magnet. For preference, the fixing means comprise just one single magnet and the kitchen appliance comprises just one single sensor. Advantageously, the sensor is able to detect the presence of the bar on the kitchen appliance.

For preference, the sensor is a reed switch.

According to the invention, the kitchen appliance comprises a proximity sensor designed to detect the fixing of the support means to the shaft. In other words, the kitchen appliance comprises a sensor detecting the presence of the support means on the kitchen appliance. The proximity sensor is inductive, capacitive or optical.

The kitchen appliance may further comprise a mass compensation system, for example involving springs, configured to compensate for the mass of the lid when the said lid is in the open position. Such a mass compensation system makes it possible to ensure easy manual operation of the lid and keep the lid in the tank-open position.

The mass compensation system may comprise at least one spring.

As an alternative, the kitchen appliance may comprise an electric actuator connected to the lid and configured to electrically command the rotation of the lid between its open position and its closed position. This advantageously allows rapid operation of the lid, or automatic control over the position of the lid.

The kitchen appliance may further comprise an electric actuator connected to the support means and configured to electrically control the rotation of the support means between their first and their second position. This advantageously allows control over the position of the support means between the raised position and the lowered position, and programming of a timer that can be used to regulate the time the baskets spend immersed in the tank.

The coaxial arrangement of the axes of rotation of the lid and of the support means makes it possible not to add additional components to the kitchen appliance. That for example makes it possible to add the support means and, therefore, the option of raising the baskets, as late as possible in the process of assembly of the kitchen appliance or even, for little effort, once the kitchen appliance has been made.

The tank may be of the type able to move, for example to pivot, on the kitchen appliance.

The kitchen appliance may comprise an electric motor, referred to as the tank pivoting motor, and an actuating cylinder connected to the tank and configured to be actuated by the electric motor so as to pivot the tank.

The kitchen appliance may comprise control means connected to the sensor.

The control means may also be connected to the electric actuator and/or to the electric actuators.

The control means may also be connected to the tank pivoting electric motor.

Having the control means connected both to the sensor that senses the presence of the support means and to the motor that pivots the tank makes it possible to increase the safety of the appliance. Specifically, that makes it possible to ensure that the support means are not present when the tank is pivoted.

According to one embodiment, the shaft is of one piece and common to the lid and to the support means.

As an alternative, the shaft may comprise a first portion and a second portion which is aligned with the first portion. In that case, the lid may be fixed to the first portion of the shaft and the support means may be fixed to the second portion of the shaft.

The kitchen appliance may comprise at least one container, for example a perforated container, supported by the support means and intended to be immersed in the tank.

For preference, the kitchen appliance comprises a plurality of containers supported by the support means and intended to be immersed in the tank. Each container of the plurality of containers is preferably perforated, the perforations of one container of the plurality of containers being different from those of another container of the plurality of containers. This advantageously makes it possible to have containers suited to different cooking modes of the kitchen appliance, and to different types of food product to be cooked using the appliance.

### DESCRIPTION OF THE FIGURES

The invention will be better understood, and further details, features and advantages of the invention will become more clearly apparent from reading the following description given by way of nonlimiting example with reference to the attached drawings, in which:
- figure 1 is a schematic perspective view of a kitchen appliance according to the invention;
- figure 2 is a schematic perspective view of a cooking tank of the kitchen appliance of figure 1;
- figure 3 is a schematic side view of part of a kitchen appliance according to the invention, in which a container is in the raised position;
- figure 4 is a schematic side view of part of a kitchen appliance according to the invention, in which a container is in the lowered position;
- figure 5 is a schematic perspective view of the support means of a kitchen appliance according to the invention;
- figures 6 and 7 are schematic perspective views of part of a kitchen appliance according to the invention;
- figure 8 is a schematic perspective view of part of a kitchen appliance according to the invention, in which the support means are fixed to the shaft;
- figure 9 is a schematic perspective view of part of a kitchen appliance according to the invention, in which the support means are removable;
- figure 10 is a schematic view from beneath of part of a kitchen appliance according to the invention;
- figure 11 is a schematic side view of part of a kitchen appliance according to the invention, in which the lid is in the open position; and
- figure 12 is a schematic side view of part of a kitchen appliance according to the invention, in which the lid is in the closed position.

### DETAILED DESCRIPTION OF THE INVENTION

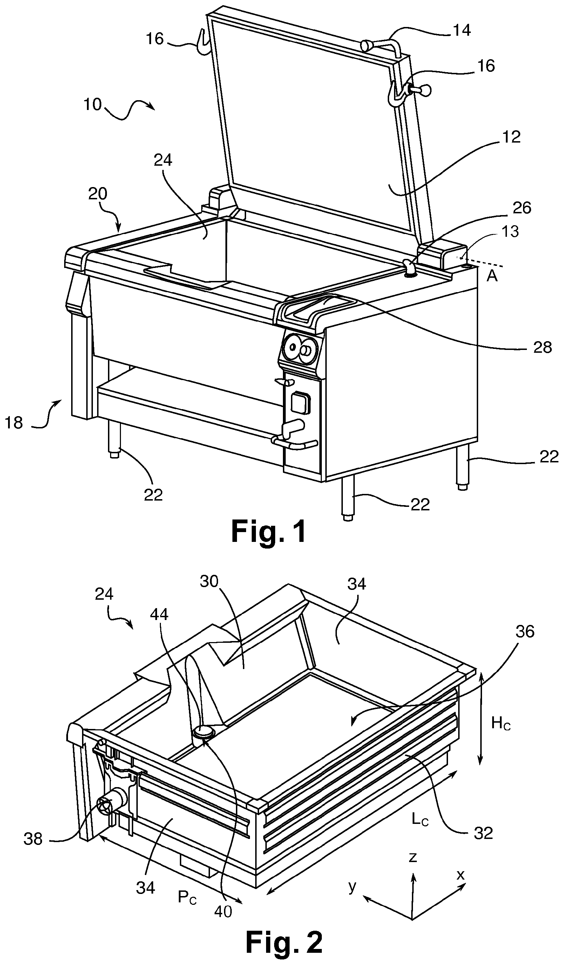

A kitchen, particularly cooking, appliance 10, is depicted in figure 1. The cooking appliance may be a multipurpose gadget comprising, for example, "fryer", "cooker", "pressure cooker" and "deep fryer" functions.

The kitchen appliance 10 comprises a lid 12 fixed to a shaft, not visible in figure 1 because it is arranged inside a protective housing 13, extending longitudinally along an axis, referred to as axis of rotation, denoted A in figure 1.

The lid 12 is mounted with the ability to rotate about the axis A between a first position, in this instance substantially vertical, in which the kitchen appliance 10 is open, and a second position, in this instance substantially horizontal, in which the said appliance is closed by the lid 12. In other words, the lid 12 is able to rotate through an angle comprised between 70° and 120°, preferably comprised between 75° and 90°, for example substantially equal to 80°.

For preference, the lid 12 is operated manually by the user of the kitchen appliance 10.

In particular, the kitchen appliance 10 has a parallelepipedal overall shape when the lid 12 of the appliance is in its closed position, the open position of the said lid 12 being depicted in figure 1.

The lid 12 may be equipped with means 14 for grasping, in this instance a handle, so that the user can manipulate the lid 12 between its open and closed positions.

The lid 12 may also be equipped with immobilizing means 16, in this instance hooks, so as to immobilize the lid in its appliance-closed position, and thus allow pressure-cooking.

The kitchen appliance 10 may be fitted with feet 22 for standing on the ground, which are connected to an underside face of the appliance. The feet 22 may be height-adjustable so as to allow the appliance to be levelled upon installation. In particular, the upper face 20 and a front face 18 of the appliance are accessible to a user.

The kitchen appliance 10 comprises a cooking tank 24, the bottom of which is intended to be heated. Such a cooking tank 24 may be made of a metallic material. In particular, the lid 12 is able to rotate between a position in which the cooking tank 24 is open and a position in which same is closed.

The volume of the cooking tank 24 may be comprised between 50 litres, namely 0.05 m³, and 250 litres, namely 0.25 m³. For preference, the cooking tank 24 has a volume comprised between 100 litres, namely 0.10 m³, and 200 litres, namely 0.20 m³. For example, the volume of the cooking tank 24 may be substantially equal to 100 litres, or to 150 litres, namely to 0.15 m³, or to 200 litres.

The kitchen appliance 10 may comprise heating means (not depicted) for heating the bottom of the cooking tank 24, for example resistive heating elements or gas burners.

The kitchen appliance 10 also comprises control means 28 for controlling various functions of the appliance. In particular, the control means 28 are configured to control functions of the kitchen appliance 10, such as cooking modes. The control means 28 may comprise a touch screen.

The control means 28 may comprise means for regulating the heating of the bottom of the cooking tank 24, which are generally situated on the front face 18 or on the upper face 20 of the kitchen appliance 10 and which are accessible to the user.

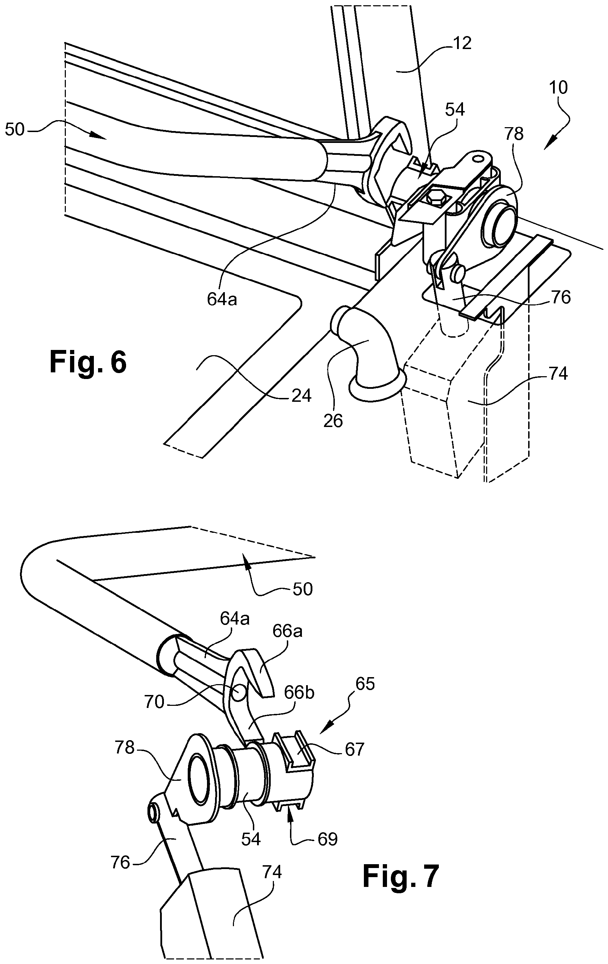

As indicated in figures 1 and 6, the kitchen appliance 10 may also comprise means 26 for supplying the cooking tank 24 with water, so that the cooking tank 24 can be supplied with water for cooking products and for cleaning the tank 24 after use.

Figure 2 more specifically depicts a cooking tank 24 of the kitchen appliance 10.

The cooking tank 24 is of parallelepipedal overall shape. The cooking tank 24 comprises a planar lower wall extending substantially horizontally, referred to as the bottom wall or the cooking wall 36. The upper face 20 of the kitchen appliance 10 extends substantially parallel to the cooking wall 36. The cooking tank 24 also comprises a peripheral wall extending upwards from the cooking wall 36 and therewith defining a volume intended to contain products that are to be cooked.

Here, the cooking tank 24 has a substantially parallelepipedal overall shape and comprises a rectangular bottom wall 36 and front 30, rear 32 and lateral 34 walls that are rectangular and substantially vertical.

The length Lc of the cooking wall 36, namely the dimension of the cooking wall 36 in the direction of the axis (x) in figure 2, may be comprised between 0.6 m and 1.3 m. For preference, the length Lc of the cooking wall 36 is comprised between 0.9 m and 1.1 m, for example being substantially equal to 1.0 m. The width Pc, or depth, of the cooking wall 36, namely the dimension of the cooking wall 36 in the direction of the axis (y) in figure 2, may be comprised between 40 cm and 80 cm. For preference, the cooking wall 36 has a width Pc comprised between 50 cm and 70 cm, for example substantially equal to 60 cm.

The length Lc of the front 30 and rear 32 walls may be comprised between 0.6 m and 1.3 m, and preferably comprised between 0.9 m and 1.1 m. For example, the front 30 and rear 32 walls have a length Lc substantially equal to 1.0 m. The height He of the front 30 and rear 32 walls, namely the dimension of the front 30 and rear 32 walls in the direction of the axis (z) in figure 2, may be comprised between 20 cm and 50 cm. For preference, the front 30 and rear 32 walls have a height He comprised between 25 cm and 40 cm, for example substantially equal to 30 cm.

The width Pc of the lateral walls 34 may be comprised between 40 cm and 80 cm, and preferably comprised between 50 cm and 70 cm. For example, the lateral walls 34 have a width Pc substantially equal to 60 cm. The height He of the lateral walls 34 may be comprised between 20 cm and 50 cm. For preference, the lateral walls 34 have a height He comprised between 25 cm and 40 cm, for example substantially equal to 30 cm.

The cooking wall 36 comprises a cooking zone, for example rectangular, which is intended to be heated.

The cooking wall 36 may comprise at least one drain orifice 40 equipped with a drain plug 44. For preference, the cooking wall 36 comprises a single drain orifice 40, so as to limit the amount of cleaning and simplify the cooking tank 24 by comparison with a separate drain for the product and a drain for the washing or cooking water.

The cooking tank 24 may also be drained by pivoting it in such a way that the bottom wall 36 is substantially vertical.

The drain orifice 40 may be arranged on the bottom wall 36 near the front face 30 of the cooking tank 24.

The cooking tank 24 may be of the mobile type, which is to say that it may be mounted so that it can move, for example pivot, on the kitchen appliance 10 and so that it is intended to be removed or pivoted for example in order to recover the cooking products contained in the tank or for draining it.

The bottom of the cooking tank 24 and, more specifically, the cooking wall 36, may be configured to be able to move between a substantially horizontal first position and a second position that is slightly inclined with respect to the said substantially horizontal position. The bottom of the cooking tank 24 may, for example, be pivoted through an angle less than or equal to 20°, preferably through an angle less than or equal to 10°, with respect to a substantially horizontal plane.

An electric actuating cylinder (not depicted) may be connected to the cooking tank 24 and configured to be actuated by an electric motor (not depicted) so as to pivot the cooking tank 24.

During cooking, the cooking wall 36 may be positioned substantially horizontally so as to allow optimum distribution of the contents of the cooking tank, such as the fat used for cooking.

When draining the tank, the cooking wall 36 may be pivoted with respect to the substantially horizontal plane. In particular, the cooking tank 36 may be pivoted towards the front face of the kitchen appliance 10, namely in the direction of the drain orifice 40, so as to accelerate the draining and ensure that no cooking products remain in the bottom of the tank.

The cooking tank 24 may equally comprise immobilizing means 38, in this instance outward projections, that complement the immobilizing means 16 of the lid, so as to immobilize the lid 12 in its tank-closed position.

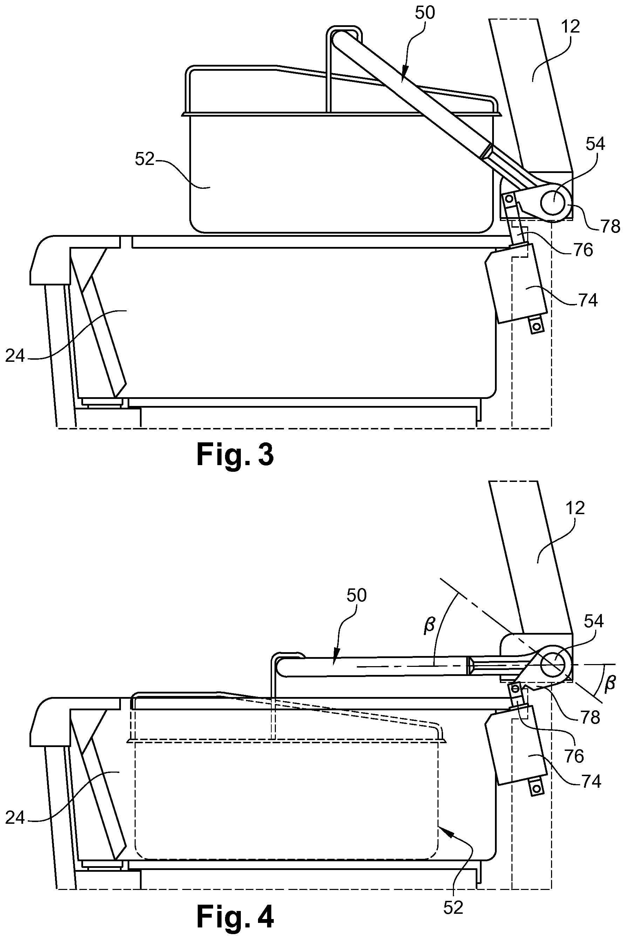

As depicted notably in figures 3 and 4, the kitchen appliance also comprises means 50 for supporting at least one container 52 intended to be immersed in the tank.

The support means 50 are fixed to the shaft 54, to which the lid 12 is also fixed. The shaft 54 is generally arranged along the rear wall 32 of the cooking tank 24, so that the lid 12 and the support means 50 are fixed to the shaft 54 above the rear wall 32 of the tank 24.

The shaft 54 may be a one-piece shaft, namely formed in one single piece. In that case, the shaft 54 is common to the lid 12 and to the support means 50.

The shaft may equally comprise a first portion and a second portion, the two portions of the shaft being aligned. In that case, the lid may be fixed to the first portion of the shaft and the support means may be fixed to the second portion of the shaft.

The support means 50 are mobile in rotation about the axis A between a first position, referred to as the raised position, in which the container 52 is intended to be out of the tank 24 and a second position, referred to as the lowered position, in which the container 52 is intended to be in the tank 24. In particular, the raised position of the support means 50 is depicted in figure 3, and the lowered position of the support means 50 is depicted in figure 4. The support means 50 are mobile in rotation through an angle comprised between 30° and 60°, preferably comprised between 40° and 50°, and for example substantially equal to 45°. In particular, the amplitude of rotation of the support means 50 is smaller than the amplitude of rotation of the lid 12.

The support means 50 and the lid 12 are mobile in rotation about the axis A independently of one another. In other words, the rotating of the lid 12 does not cause the rotating of the support means 50, and vice versa; and there is no need for one out of the lid 12 and the support means 50 to be in rotation for the other also to be in rotation.

The kitchen appliance may comprise at least one container 52 supported by the support means 50 and intended to be immersed in the tank 24. The container 52 may be one that is non-perforated, as depicted in figures 3 and 4, or perforated (not depicted). The container 52 may be a basket formed for example of a wire framework covered with a mesh of a mesh size suited to the product that is to be cooked.

For preference, the appliance comprises a plurality of containers 52 supported by the support means 50 and intended to be immersed in the tank 24. Each container 52 may be non-perforated, or else perforated, or the appliance may comprise both perforated containers and non-perforated containers. A perforated container 52 has perforations. The perforations of one container 52 may differ from the perforations of another container 52 of the appliance. In particular, the containers 52 may have perforations with different mesh sizes or perforations of different shapes.

The or each container 52 may be equipped with a loop configured to allow the or each container to be hooked onto the support means 50.

The support means 50 may be fixed to the kitchen appliance 10. In this case, the containers 52 are preferably removable from the support means 50.

For preference, the support means 50 are removable. In other words, the support means 50 are fixed reversibly to the shaft 54 and can be removed from the kitchen appliance 10. In that case, the containers 52 may be fixed to the support means 50. For preference, the containers 52 are removable from the support means 50.

In particular, the support means 50 are mounted on the kitchen appliance 10 manually.

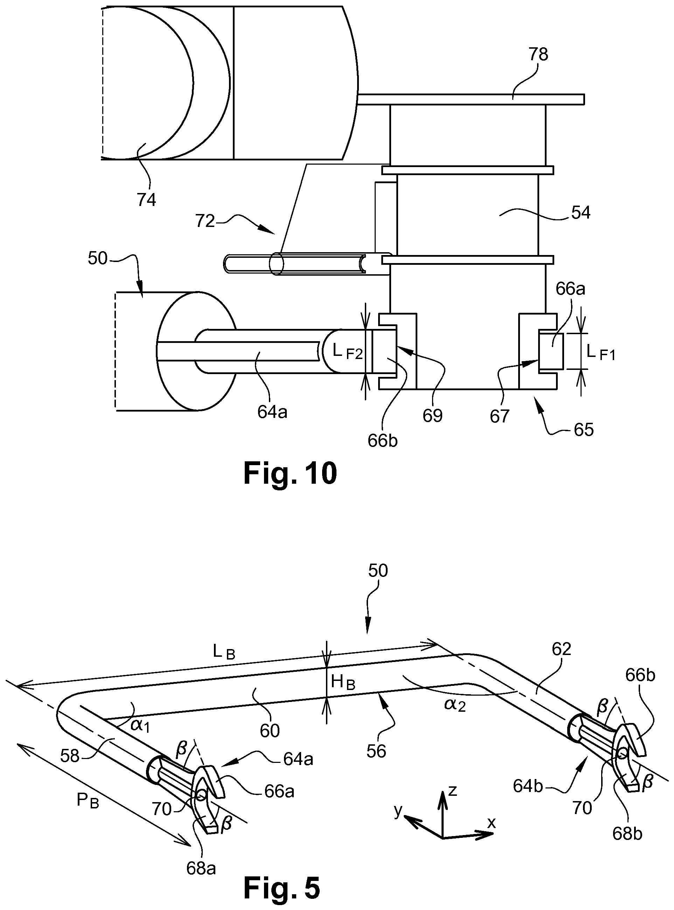

As depicted in figure 5, the support means 50 may comprise a bar 56 with the overall shape of a "U". More specifically, the support means 50 comprise a bar 56 having a first section 58 extending along an axis, a second section 60 extending obliquely, notably perpendicularly, with respect to the first section 58, and a third section 62 extending obliquely, notably perpendicularly, with respect to the second section 60, and notably substantially parallel to the first section 58. In particular, the second section 60 is arranged between the first section 58 and the third section 62. The angle α1 formed between the first section 58 and the second section 60 may be comprised between 70° and 140°, preferably comprised between 80° and 110°. For example, the angle α1 is substantially equal to 90° in figure 5. For preference, the bar 56 is symmetric. In other words, the α2 formed between the second section 60 and the third section 62 may be comprised between 70° and 140°, preferably comprised between 80° and 110°, and preferably substantially equal to 90°.

The bar 56 may have a polygonal cross section, or a circular cross section as depicted in figure 5.

The length L_{B}, namely the dimension along the axis x, of the second section 60 may be comprised between 0.6 m and 1.2 m, and preferably comprised between 0.8 m and 1.1 m. For example, the second section 60 has a length L_{B} substantially equal to 1.0 m. In particular, the second section 60 may be substantially the same length as the tank 24. The length P_{B} of the first and third sections 58, 62, namely the dimension along the axis y of the first and third sections 58, 62 in the lowered position of the support means 50, may be comprised between 20 cm and 60 cm, and preferably comprised between 30 cm and 50 cm. For example, the first and third sections 58, 62 have a width P_{B} substantially equal to 45 cm. The thickness H_{B} of the bar 56, namely the dimension along the axis z of the first, second and third sections 58, 60, 62 in the lowered position of the support means 50 may be comprised between 2 cm and 6 cm, and preferably comprised between 3 cm and 5 cm. For example, the bar 56 has a thickness H_{B} substantially equal to 4 cm.

The bar 56 may be made from a metallic material.

The bar 56 may be solid, namely full of material. This advantageously allows the support means 50 to be reinforced, which is to say stiffened. The bar 56 may be filled with the same material(s) as the material(s) of which it is composed, or else with one or more other metallic or non-metallic material(s).

The bar 56 may be hollow, which is to say empty of material. In that case, the bar 56 is in the form of a pipe. This advantageously allows the support means 50 to be lightened.

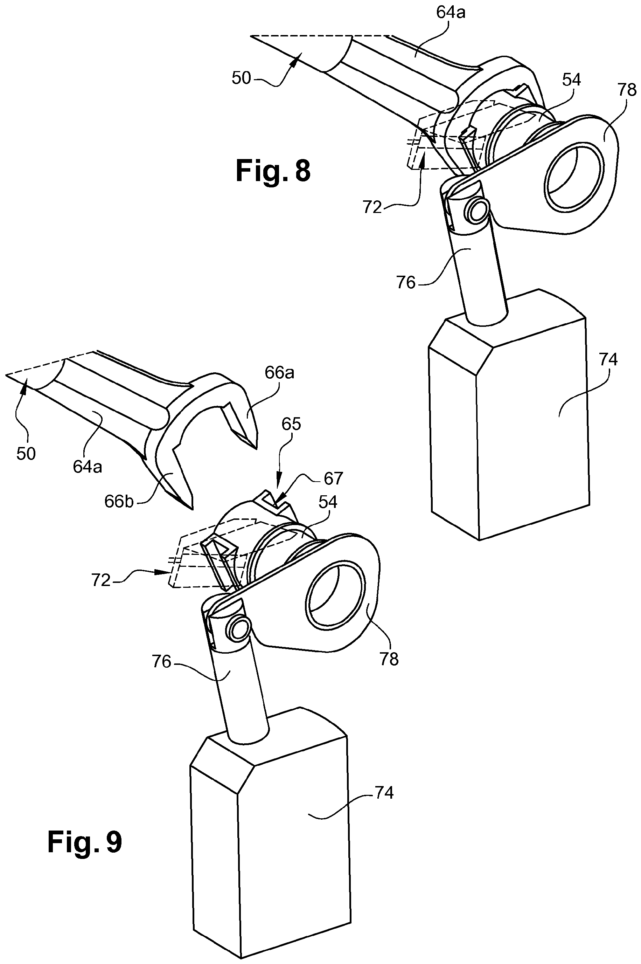

Figures 6 to 10 depict the fixing of the support means 50 to the shaft 54. In figures 6, 7 and 9, the support means 50 are intended to be fixed to the shaft 54, and in figures 8 and 10 the support means 50 are fixed to the shaft 54.

The support means 50 may comprise fixing means 64a, 64b for fixing to the shaft 54, which are arranged at each end of the bar 56. More specifically, the fixing means 64a, 64b are arranged at an end of first section 58, at the end distant from the second section 60, and at an end of the third section 62, at the end distant from the second section 60.

The shaft 54 may comprise complementary fixing means 65 which are configured to collaborate with the fixing means 64a, 64b of the support means 50.

The complementary fixing means 65 may be arranged on each side of the lid 12. In other words, the fixing means 64a, 64b may be fixed to the shaft 54 on each side of the lid 12.

The fixing means 64a, 64b may be in the shape of an open-ended spanner. In particular, each fixing means 64a, 64b may comprise a first fork 66a, 66b and a second form 68a, 68b.

The first fork 66a, 66b of each fixing means 64a, 64b may have dimensions different from the dimensions of the second fork 68a, 68b of each fixing means 64a, 64b. More specifically, as depicted in figure 10, the width L_{F1} of the first fork 66a, 66b is different from the width L_{F2} of the second fork 68a, 68b. In particular, the second fork 68a, 68b is wider than the first fork 66a, 66b. The first and second forks 64a, 64b form a poka yoke device, namely a device that makes it possible to avoid errors in the mounting of the support means 50 on the shaft 54.

The complementary fixing means 65 may comprise a first slot 67 and a second slot 69 intended to collaborate respectively with a first fork 66a, 66b and with a second fork 68a, 68b. The dimensions of the slots 67, 69 are tailored to the dimensions of the first and second forks 66a, 66b, 68a, 68b. In other words, the first slot 67 is configured to collaborate with a first fork 66a, 66b, but is not designed to collaborate with a second fork 68a, 68b, whereas the second slot 69 is configured to collaborate with a second fork 68a, 68b, but is not designed to collaborate with a first fork 66a, 66b.

The first and second slots 67, 69 may have different dimensions. The first slot 67 may have a width substantially equal to the width L_{F1} of the first fork 66a, 66b, and the second slot 69 may have a width substantially equal to the width L_{F2} of the second fork 68a, 68b.

When mounting the support means 50 on the shaft 54, each first fork 66a, 66b is intended to be inserted into a first slot 67 whereas each second fork 68a, 68b is intended to be inserted into a second slot 69.

If the bar 56 is arranged in the correct orientation for mounting, each first fork 66a, 66b is then inserted into a first slot 67 and each second fork 68a, 68b is inserted into a second slot 69.

If the bar 56 is the wrong way round, namely is not oriented correctly for mounting, each second fork 68a, 68b is arranged in such a way as to be inserted into a first slot 67 and each first fork 66a, 66b is arranged in such a way as to be inserted into a second slot 69. However, because the dimensions of the first and second forks are different, and because the dimensions of the first and second slots are different, it will then not be possible to fix the bar 56 to the shaft 54.

The bar 56 may extend in a plane, for example the plane containing the axes x and y in figure 10. The first and second forks 66a, 66b, 68a, 68b are inclined with respect to this plane. In other words, the first and second forks 66a, 66b, 68a, 68b do not extend in the same plane as the first, second and third sections 58, 60, 62. The angle β formed between the bar 56, in this instance the first and third sections, 58, 62, and the first and second forks 66a, 66b, 68a, 68b may be comprised between 20° and 60°, preferably between 30° and 50°, for example substantially equal to 40° as depicted in figures 4 and 5. A positive angle β between the bar 56 and the first and second forks 66a, 66b, 68a, 68b makes it possible to avoid accidental removal of the bar 56 in the lowered position. Specifically, because the lowered position of the containers is a substantially horizontal position, a zero angle β between the bar and the first and second forks could allow the fixing means to be disassembled from the kitchen appliance.

The first and second forks 66a, 66b, 68a, 68b may be made of a ferromagnetic material, and the first and second slots 67, 69 may comprise a magnet. The magnets of the first and second slots 67, 69 may be configured to exert a force of attraction on the ferromagnetic material of which the first and second forks 66a, 66b, 68a, 68b are made. This advantageously makes it easier to mount the support means 50 on the shaft, since the fixing means 64a, 64b are attracted in the direction of the first and second slots 67, 69. Furthermore, this advantageously makes it possible to improve the securing of the support means 50 to the shaft 54 thus avoiding accidental removal of the bar 56, notably when the support means 50 are in the lowered position.

Conversely, the first and second slots 67, 69 may be made from a ferromagnetic material and the first and second forks 66a, 66b, 68a, 68b may comprise a magnet configured to exert a force of attraction on the ferromagnetic material of which the said first and second slots 67, 69 are made.

The kitchen appliance 10 may comprise a proximity sensor (not depicted), which is for example inductive, capacitive or optical, designed to detect the fixing of the support means 50 to the shaft 54 and therefore the presence of the support means 50 on the kitchen appliance 10. In other words, the function of detecting the bar 56 may be performed by a proximity sensor.

The fixing means 64a, 64b may comprise at least one magnet 70, notably visible in figures 5 and 7. For preference, the fixing means 64a, 64b comprise just one single magnet 70. In other words, out of the fixing means 64a, 64b, just one comprises the magnet 70. The fixing means 64a, 64b may comprise a plurality of magnets, for example two magnets 70. In that case, each fixing means 64a, 64b comprises a magnet 70. The magnet 70 may be arranged between a first fork 66a, 66b and a second fork 68a, 68b, as depicted in figures 5 and 7.

The kitchen appliance may also comprise at least one sensor 72 designed to detect the magnet 70. In particular, the sensor 72 is a proximity sensor. For preference, the appliance comprises just one sensor 72. The sensor 72 may, for example, be arranged at a bearing of the kitchen appliance 10. The sensor 72 may be a magnetic switch, for example a reed switch, notably visible in figure 10 and in dotted line in figures 8 and 9. In that case, the forks need to be made from a material that is not ferromagnetic, so as not to interfere with the magnetic field of the magnet and reduce its action on the sensor.

As depicted in figures 6 to 10, the kitchen appliance may further comprise an electric actuator 76 connected to the support means 50 and configured to electrically command the rotation of the support means 50 between the raised position and the lowered position. In other words, the movement of the support means 50 is brought about electrically.

In particular, the electric actuator 74 is configured to actuate an electric actuating cylinder 76, which effects a linear movement. In figure 3, the electric actuating cylinder 76 is depicted in the extended position, namely in the position in which the containers 52 are raised, and in figure 4, the electric actuator 76 is depicted in the retracted position, namely in the position in which the containers 52 are lowered.

The electric actuating cylinder 76 is connected to a link rod 78 which converts the linear movement of the electric actuating cylinder 76 into a rotational movement of the support means 50.

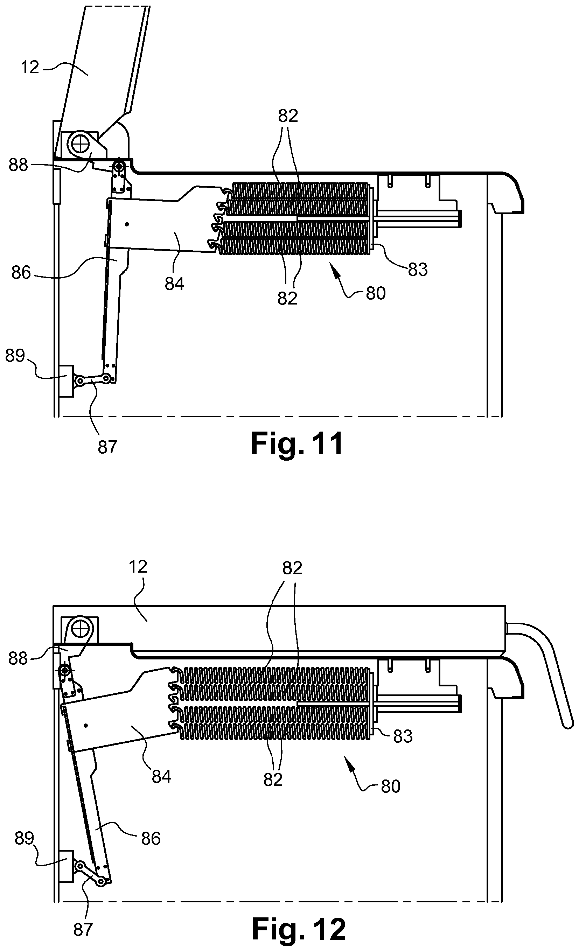

Figures 11 and 12 depict a kitchen appliance equipped with a mass compensation system 80 configured to compensate for the mass of the lid 12 when the latter is in the open position. More specifically, the mass compensation system 80 allows the lid 12 to be kept in its cooking-tank-open position, as depicted in figure 11.

The mass compensation system 80 may be a spring-loaded compensation system. In other words, the mass compensation system 80 may comprise at least one spring 82. For preference, the mass compensation system 80 comprises a plurality of springs 82, for example four springs 82 in figures 11 and 12.

The springs 82 may be connected at a first end to a chassis 83, which is intended to be fixed during rotational movement of the lid 12, and at a second end to a link rod 84.

The springs 82 may extend substantially horizontally. As depicted in figure 11, when the lid 12 is in the open position, the springs 82 are in a rest position, which means to say that the springs 82 are tensioned to the minimum; whereas in figure 12, when the lid 12 is in the closed position, the springs 82 are in a stressed position, which is to say that the springs 82 are tensioned to the maximum.

The movement of the link rod 84 leads to the compression and extension movement of the springs 82 between their rest position and their stressed position.

An arm 86 is connected to the link rod 84, to a link rod 88 and to a link 87.

The link 87 is connected to a chassis 89 which is intended to be fixed during rotational movement of the lid 12. The movement of the arm 86 causes the link to rotate relative to the chassis 89.

The link rod 88 is connected to the lid 12. Rotation of the lid 12 causes the link rod 88 to move, and this causes the arm 86 to move, and this causes the link rod 84 to move.

Thus, the assembly made up of the link rod 84, of the arm 86, of the link 87 and of the link rod 88 allows the rotational movement of the lid 12 to be transmitted to the springs 82 which compensate for the mass of the said lid 12 and keep the said lid 12 in its open position.

As an alternative, the kitchen appliance 10 may comprise an electric actuator (not depicted) connected to the lid 12 and configured to electrically command the rotation of the lid between its open position and its closed position. In other words, the movement of the lid 12 may be brought about electrically.

The electric actuator of the lid 12 may be the electric actuator 74 of the support means 50. In other words, the electric actuator 74 may also be connected to the lid 12 and be configured to electrically command the rotation of the lid 12 between its open position and its closed position.

The control means 28 may be connected to the sensor 72. The control means 28 may also be connected to the electric actuator 74 and/or to the electric actuator of the lid 12. The control means 28 may also be connected to the electric motor for pivoting the tank.

The control means 28 connected at once to the sensor 72 and to the electric motor for pivoting the tank advantageously make it possible to ensure that the support means 50 are not present before engaging the pivoting of the tank.

## Claims

1. Kitchen, particularly cooking, appliance (10), comprising:
- a tank (24), and
- a lid (12) fixed to a shaft (54) extending longitudinally along an axis (A), referred to as the axis of rotation, the said lid (12) being mobile in rotation about the said axis (A) of rotation between a first position, referred to as the open position, in which the tank (24) is open, and a second position, referred to as the closed position, in which the tank (24) is closed,
the kitchen appliance also comprising:
- support means (50) for supporting at least one container (52) intended to be immersed in the tank (24), the said support means (50) being fixed to the said shaft (54) and mobile in rotation about the said axis (A) of rotation between a first position, referred to as the raised position, in which the said at least one container (52) is intended to be out of the tank (24), and a second position, referred to as the lowered position, in which the said at least one container (52) is intended to be in the tank (24),
wherein the said support means (50) and the lid (12) are mobile in rotation about the said axis (A) of rotation independently of one another;
said kitchen appliance being **characterised in that** the kitchen appliance comprises a proximity sensor designed to detect the fixing of the said support means (50) to the said shaft (54), the said proximity sensor being inductive, capacitive or optical.

2. Kitchen appliance (10) according to the preceding claim, in which the support means (50) are removable from the shaft (54).

3. Kitchen appliance (10) according to one of the preceding claims, in which the support means (50) comprise a bar (56) in the overall shape of a U.

4. Kitchen appliance (10) according to the preceding claim, in which the support means (50) comprise fixing means (64a, 64b) for fixing to the shaft (54), which are arranged at each end of the said bar (56).

5. Kitchen appliance (10) according to the preceding claim, in which the said fixing means (64a, 64b) are fixed to the shaft (54) on each side of the lid (12).

6. Kitchen appliance (10) according to one of Claims 4 and 5, in which the said fixing means (64a, 64b) have an open-ended-spanner shape and comprise a first fork (66a, 66b) and a second fork (68a, 68b) .

7. Kitchen appliance (10) according to the preceding claim, in which the second fork (68a, 68b) has dimensions different from those of the first fork (66a, 66b).

8. Kitchen appliance (10) according to one of Claims 6 and 7, in which the said bar (56) extends in a plane, and the said first and second forks (66a, 66b; 68a, 68b) are inclined with respect to the said plane.

9. Kitchen appliance (10) according to one of Claims 4 to 8, in which the said fixing means (64a, 64b) comprise at least one magnet (70) and in which the proximity sensor of the kitchen appliance (10) is arranged in such a way as to detect the said magnet (70).

10. Kitchen appliance (10) according to the preceding claim, in which the said proximity sensor is a reed switch.

11. Kitchen appliance (10) according to one of claims 9 and 10, comprising control means (28) connected to the said proximity sensor (72).

12. Kitchen appliance (10) according to one of the preceding claims, further comprising an electric actuator (74) connected to the support means (50) and configured to electrically control the rotation of the support means (50) between their first and their second position.

13. Kitchen appliance (10) according to claims 11 and 12, in which the said control means (28) are connected to an electric motor (74).

14. Kitchen appliance (10) according to one of the preceding claims, further comprising a mass compensation system (80) configured to compensate for the mass of the lid (12) when the said lid (12) is in the open position and optionally,
in which the mass compensation system comprises at least one spring (82)and optionally,
in which the said shaft (54) comprises a first portion and a second portion which is aligned with the said first portion, the said lid (12) being fixed to the said first portion of the shaft (54) and the said support means (50) being fixed to the said second portion of the shaft (54).

15. Kitchen appliance (10) according to one of the preceding claims, comprising at least one container (52), for example a perforated container, supported by the said support means (50) and intended to be immersed in the tank (24) and optionally further comprising a plurality of containers (52) supported by the said support means (50) and intended to be immersed in the tank (24), each container of the plurality of containers (52) being perforated, the perforations of one container of the plurality of containers (52) being different from those of another container of the plurality of containers (52).

## Patentansprüche

1. Küchengerät, insbesondere Kochgerät, (10), aufweisend:
- einen Tank (24) und
- einen Deckel (12), der an einer Welle (54) befestigt ist, die sich in Längsrichtung entlang einer Achse (A), der sogenannten Drehachse, erstreckt, wobei der Deckel (12) um die Drehachse (A) zwischen einer ersten Position, der sogenannten offenen Position, in der der Tank (24) offen ist, und einer zweiten Position, der sogenannten geschlossenen Position, in der der Tank (24) geschlossen ist, drehbar ist,
das Küchengerät auch aufweisend:
- Stützmittel (50) zum Stützen zumindest eines Behälters (52), der zum Eintauchen in den Tank (24) bestimmt ist, wobei die Stützmittel (50) an der Welle (54) befestigt und um die Drehachse (A) zwischen einer ersten Position, der sogenannten angehobenen Position, in der der zumindest eine Behälter (52) dazu bestimmt ist, sich außerhalb des Tanks (24) zu befinden, und einer zweiten Position, der sogenannten abgesenkten Position, in der der zumindest eine Behälter (52) dazu bestimmt ist, sich in dem Tank (24) zu befinden, drehbar sind,
wobei die Stützmittel (50) und der Deckel (12) unabhängig voneinander um die Drehachse (A) drehbar sind; wobei das Küchengerät **dadurch gekennzeichnet ist, dass** das Küchengerät einen Näherungssensor aufweist, der dazu ausgelegt ist, die Befestigung der Stützmittel (50) an der Welle (54) zu erfassen, wobei der Näherungssensor induktiv, kapazitiv oder optisch ist.

2. Küchengerät (10) nach dem vorhergehenden Anspruch, wobei die Stützmittel (50) von der Welle (54) abnehmbar sind.

3. Küchengerät (10) nach einem der vorhergehenden Ansprüche, wobei die Stützmittel (50) eine Stange (56) in der allgemeinen Form eines U aufweisen.

4. Küchengerät (10) nach dem vorhergehenden Anspruch, wobei die Stützmittel (50) Befestigungsmittel (64a, 64b) zum Befestigen an der Welle (54) aufweisen, die an jedem Ende der Stange (56) angeordnet sind.

5. Küchengerät (10) nach dem vorhergehenden Anspruch, wobei die Befestigungsmittel (64a, 64b) an der Welle (54) auf jeder Seite des Deckels (12) befestigt sind.

6. Küchengerät (10) nach einem der Ansprüche 4 und 5, wobei die Befestigungsmittel (64a, 64b) die Form eines offenen Schraubenschlüssels aufweisen und eine erste Gabel (66a, 66b) und eine zweite Gabel (68a, 68b) aufweisen.

7. Küchengerät (10) nach dem vorhergehenden Anspruch, wobei die zweite Gabel (68a, 68b) andere Abmessungen aufweist als die erste Gabel (66a, 66b).

8. Küchengerät (10) nach einem der Ansprüche 6 und 7, wobei sich die Stange (56) in einer Ebene erstreckt und die erste und zweite Gabel (66a, 66b; 68a, 68b) relativ zu dieser Ebene geneigt sind.

9. Küchengerät (10) nach einem der Ansprüche 4 bis 8, wobei die Befestigungsmittel (64a, 64b) zumindest einen Magneten (70) aufweisen und wobei der Näherungssensor des Küchengeräts (10) so angeordnet ist, dass er den Magneten (70) erfasst.

10. Küchengerät (10) nach dem vorhergehenden Anspruch, wobei der Näherungssensor ein Zungenschalter ist.

11. Küchengerät (10) nach einem der Ansprüche 9 und 10, aufweisend mit dem Näherungssensor (72) verbundene Steuermittel (28).

12. Küchengerät (10) nach einem der vorhergehenden Ansprüche, ferner aufweisend einen elektrischen Aktuator (74), der mit den Stützmitteln (50) verbunden und ausgestaltet ist, um die Drehung der Stützmittel (50) zwischen ihrer ersten und ihrer zweiten Position elektrisch zu regeln.

13. Küchengerät (10) nach den Ansprüchen 11 und 12, wobei die Steuermittel (28) mit einem Elektromotor (74) verbunden sind.

14. Küchengerät (10) nach einem der vorhergehenden Ansprüche, ferner aufweisend ein Massenkompensationssystem (80), das zum Kompensieren der Masse des Deckels (12) ausgestaltet ist, wenn sich der Deckel (12) in der offenen Position befindet, und optional,
wobei das Massenkompensationssystem zumindest eine Feder (82) aufweist und optional,
wobei die Welle (54) einen ersten Abschnitt und einen mit dem ersten Abschnitt fluchtenden zweiten Abschnitt aufweist, wobei der Deckel (12) an dem ersten Abschnitt der Welle (54) befestigt ist und die Stützmittel (50) an dem zweiten Abschnitt der Welle (54) befestigt sind.

15. Küchengerät (10) nach einem der vorhergehenden Ansprüche, aufweisend zumindest einen Behälter (52), beispielsweise einen perforierten Behälter, der von den Stützmitteln (50) gestützt wird und zum Eintauchen in den Tank (24) bestimmt ist, und optional ferner eine Vielzahl von Behältern (52) aufweisend, die von den Stützmitteln (50) gestützt werden und zum Eintauchen in den Tank (24) bestimmt sind, wobei jeder Behälter der Vielzahl von Behältern (52) perforiert ist und sich die Perforationen eines Behälters der Vielzahl von Behältern (52) von denen eines anderen Behälters der Vielzahl von Behältern (52) unterscheiden.

## Revendications

1. Appareil de cuisine, en particulier de cuisson (10), comprenant :
- un réservoir (24), et
- un couvercle (12) fixé à un arbre (54) s'étendant longitudinalement le long d'un axe (A), dit l'axe de rotation, ledit couvercle (12) étant mobile en rotation autour dudit axe (A) de rotation entre une première position, dite position ouverte, dans laquelle le réservoir (24) est ouvert, et une deuxième position, dite position fermée, dans laquelle le réservoir (24) est fermé,
l'appareil de cuisine comprenant également :
- des moyens de support (50) pour le support d'au moins un récipient (52) destiné à être immergé dans le réservoir (24), lesdits moyens de support (50) étant fixés audit arbre (54) et mobiles en rotation autour dudit axe (A) de rotation entre une première position, dite position relevée, dans lequel ledit au moins un récipient (52) est destiné à être hors du réservoir (24), et une deuxième position, appelé position abaissée, dans laquelle ledit au moins un récipient (52) est destiné à être dans le réservoir (24),
dans lequel lesdits moyens de support (50) et le couvercle (12) sont mobiles en rotation autour dudit axe (A) de rotation indépendamment l'un de l'autre ; ledit appareil de cuisine étant **caractérisé en ce que** l'appareil de cuisine comprend un capteur de proximité conçu pour détecter la fixation desdits moyens de support (50) sur ledit arbre (54), ledit capteur de proximité étant inductif, capacitif ou optique.

2. Appareil de cuisine (10) selon la revendication précédente, dans lequel les moyens de support (50) peuvent être retirés de l'arbre (54).

3. Appareil de cuisine (10) selon l'une quelconque des revendications précédentes, dans lequel les moyens de support (50) comprennent une barre (56) en forme générale de U.

4. Appareil de cuisine (10) selon la revendication précédente, dans lequel les moyens de support (50) comprennent des moyens de fixation (64a, 64b) pour la fixation à l'arbre (54), qui sont agencés sur chaque extrémité de ladite barre (56).

5. Appareil de cuisine (10) selon la revendication précédente, dans lequel lesdits moyens de fixation (64a, 64b) sont fixés à l'arbre (54) sur chaque côté du couvercle (12).

6. Appareil de cuisine (10) selon l'une quelconque des revendications 4 et 5, dans lequel lesdits moyens de fixation (64a, 64b) ont une forme de clé à extrémité ouverte et comprennent une première fourche (66a, 66b) et une deuxième fourche (68a, 68b).

7. Appareil de cuisine (10) selon la revendication précédente, dans lequel la deuxième fourche (68a, 68b) a des dimensions différentes de celles de la première fourche (66a, 66b) .

8. Appareil de cuisine (10) selon l'une quelconque des revendications 6 et 7, dans lequel ladite barre (56) s'étend dans un plan, et lesdites première et deuxième fourches (66a, 66b ; 68a, 68b) sont inclinées par rapport audit plan.

9. Appareil de cuisine (10) selon l'une quelconque des revendications 4 à 8, dans lequel lesdits moyens de fixation (64a, 64b) comprennent au moins un aimant (70) et dans lequel le capteur de proximité de l'appareil de cuisine (10) est agencé de manière à détecter ledit aimant (70).

10. Appareil de cuisine (10) selon la revendication précédente, dans lequel ledit capteur de proximité est un commutateur à lames.

11. Appareil de cuisine (10) selon l'une quelconque des revendications 9 et 10, comprenant des moyens de commande (28) reliés audit capteur de proximité (72).

12. Appareil de cuisine (10) selon l'une quelconque des revendications précédentes, comprenant en outre un actionneur électrique (74) relié aux moyens de support (50) et configuré pour commander électriquement la rotation des moyens de support (50) entre leur première et leur deuxième position.

13. Appareil de cuisine (10) selon les revendications 11 et 12, dans lequel lesdits moyens de commande (28) sont reliés à un moteur électrique (74).

14. Appareil de cuisine (10) selon l'une quelconque des revendications précédentes, comprenant en outre un système de compensation de masse (80) configuré pour compenser la masse du couvercle (12) lorsque ledit couvercle (12) est dans la position ouverte et facultativement,
dans lequel le système de compensation de masse comprend au moins un ressort (82) et facultativement,
dans lequel ledit arbre (54) comprend une première partie et une deuxième partie qui est alignée avec ladite première partie, ledit couvercle (12) étant fixé à ladite première partie de l'arbre (54) et lesdits moyens de support (50) étant fixés à ladite deuxième partie de l'arbre (54).

15. Appareil de cuisine (10) selon l'une quelconque des revendications précédentes, comprenant au moins un récipient (52), par exemple un récipient perforé, supporté par lesdits moyens de support (50) et destiné à être immergé dans le réservoir (24) et comprenant facultativement en outre une pluralité de récipients (52) supportés par lesdits moyens de support (50) et destinés à être immergés dans le réservoir (24), chaque récipient parmi la pluralité de récipients (52) étant perforé, les perforations d'un récipient parmi la pluralité de récipients (52) étant différentes de celles d'un autre récipient parmi la pluralité de récipients (52).
